# EUROPÄISCHE PATENTSCHRIFT

(11) **EP 1 358 692 B1**
(45) Veröffentlichungstag und Bekanntmachung des Hinweises auf die Patenterteilung: **17.09.2008**
(21) Anmeldenummer: 02714141.5
(22) Anmeldetag: 01.02.2002
(51) Int. Cl.: H01M 8/02, H01M 2/08

(54) **BRENNSTOFFZELLE**
FUEL CELLS
PILE A COMBUSTIBLE

(30) Priorität: 07.02.2001 EP 01102909
(43) Veröffentlichungstag der Anmeldung: 05.11.2003
(73) Patentinhaber: SIEMENS AKTIENGESELLSCHAFT, 80333 München (DE)
(72) Erfinder: LERSCH, Josef, 91336 Heroldsbach (DE); HARTNACK, Herbert, 91056 Erlangen (DE); STRASSER, Karl, 91058 Erlangen (DE); MATTEJAT, Arno, 91088 Bubenreuth (DE)
(86) Internationale Anmeldenummer: PCT/EP2002/001078
(87) Internationale Veröffentlichungsnummer: WO 2002/063706

(56) Entgegenhaltungen:
- EP-A- 0 973 218
- WO-A-01/04983
- WO-A-92/03854
- DE-A- 3 719 525

## Beschreibung

Die Erfindung betrifft eine Brennstoffzelle mit zwei Bauteilen, einem an die Bauteile angrenzenden Gasraum und einer zwischen den Bauteilen angeordneten und den Gasraum gegen die äußere Atmosphäre abdichtenden Dichtung.

In einer Brennstoffzelle wird durch die Zusammenführung von Wasserstoff (H₂) und Sauerstoff (O₂) in einer elektrochemischen Reaktion elektrische Energie und Wärme erzeugt, wobei sich der Wasserstoff und der Sauerstoff zu Wasser (H₂O) verbinden. Zu diesem Zweck wird in einen Anodengasraum der Brennstoffzelle Wasserstoff und in einen Kathodengasraum der Brennstoffzelle Sauerstoff eingeleitet. Der Wasserstoff kann entweder als reiner Wasserstoff oder als ein wasserstoffhaltiges Brenngas in die Brennstoffzelle eingespeiste werden. Der Sauerstoff kann als reiner Sauerstoff oder auch beispielsweise in Form von Luft der Brennstoffzelle zugeleitet werden. Bei der Konstruktion einer Brennstoffzelle als solche oder eines sich aus einer Vielzahl von Brennstoffzellen zusammensetzenden Brennstoffzellenblocks ist darauf zu achten, dass der Anodengasraum vom Kathodengasraum einer Brennstoffzelle gasdicht getrennt ist. Außerdem müssen die Gasräume des Brennstoffzellenblocks in der Weise gegen eine äußere Atmosphäre abgedichtet werden, dass keines der beiden Betriebsgase aus dem Brennstoffzellenblock austreten kann. Daher sind die Gasräume einer Brennstoffzelle mit einer oder mehreren Dichtungen abgedichtet.

Eine Gasraumdichtung einer Brennstoffzelle kommt während des Betriebs der Brennstoffzelle mit einem der Betriebsgase der Brennstoffzelle in Berührung. Die Betriebsgase einer Brennstoffzelle sind chemisch sehr aggressiv, insbesondere wenn die Brennstoffzelle mit reinem Sauerstoff betrieben wird. Erschwerend kommt hinzu, dass auch Niedertemperaturbrennstoffzellen bei einer Temperatur von mindestens 70 °C betrieben werden. Der chemische Angriff von reinem Sauerstoff in Verbindung mit einer Temperatur um oder über 70 °C führt bei herkömmlichen elastischen Dichtungen dazu, dass die Dichtungen ihre Elastizität und mechanische Stabilität verlieren.

In DE3719525 wird ein besonders für Brennstoffzellen geeignetes Dichtungsmaterial von hoher Temperatur - und Korrosionsbeständigkeit erwähnt, welches aus einem Säurefesten, gegen hohe Temperaturen stabilen fluorierten Elastomeren besteht.

Aufgabe der vorliegenden Erfindung ist es daher, eine Brennstoffzelle mit einer gegenüber den Betriebsgasen chemisch stabilen Gasraumdichtung anzugeben.

Diese Aufgabe wird von einer Brennstoffzelle mit zwei Bauteilen, einem an die Bauteile angrenzenden Gasraum und einer zwischen den Bauteilen angeordneten und den Gasraum gegen die Umgebung des Gasraumes abdichtenden Dichtung gelöst, wobei die Dichtung zumindest einen Teilbereich aus rußgefülltem bisphenolisch vernetzten Fluorkautschuk umfasst.

In langjährigen Versuchen hat sich gezeigt, dass rußgefüllter und bisphenolisch vernetzter Fluorkautschuk gegenüber reinem und bis zu 120 °C erhitztem Sauerstoff über viele hundert Stunden chemisch stabil ist. Durch diese chemische Stabilität verliert der Fluorkautschuk seine hohe Formstabilität nicht und kann somit ein dauerhaft zuverlässiges Abdichten eines Gasraums einer Brennstoffzelle gewährleisten. Außerdem lässt sich der Werkstoff mit angemessenem Aufwand in formgebenden Werkzeugen verarbeiten und weist eine so geringe Porosität auf, dass sich leicht gasdichte Dichtflächen bilden lassen. Zusätzlich ist der Werkstoff gut mit metallischen Oberflächen gasdicht verbindbar. Ein weiterer Vorteil des bisphenolisch vernetzten und rußgefüllten Fluorkautschuks liegt in seinem hohen elektrischen Widerstand. Hierdurch ist der Werkstoff geeignet, zwei Bauteile einer Brennstoffzelle, die während des Betriebs der Brennstoffzelle auf einem unterschiedlichen elektrischen Potential liegen, gasdicht und elektrisch isolierend miteinander zu verbinden.

Die Dichtung ist so geformt, dass lediglich rußgefüllter bisphenolisch vernetzter Fluorkautschuk mit einem oder den Betriebsgasen in Berührung kommt. Hierzu ist die Dichtung zumindest in einem Teilbereich aus diesem Fluorkautschuk. Die Dichtung kann hierbei ganz aus dem Fluorkautschuk bestehen oder aber auch aus verschiedenen Schichten aufgebaut sein, wobei nicht mit den Betriebsgasen in Verbindung kommende Schichten auch aus anderen Materialien bestehen können.

Die Dichtung kann ein- oder mehrstückig ausgebildet sein. Außerdem muss der Gasraum nicht zwangsläufig von einer einzigen Dichtung abgedichtet sein, sondern kann auch von mehreren voneinander getrennten Dichtungen abgedichtet sein. Auch muss der Gasraum nicht vollständig abgedichtet sein sondern es können auch ein oder mehrere Öffnungen beispielsweise für eine Gaszufuhr und eine Gasabfuhr aus dem Gasraum geöffnet bleiben. Die Dichtung verhindert das Ausströmen eines Gases aus dem Gasraum in die Umgebung des Gasraumes. Diese Umgebung kann die äußere Atmosphäre um die Brennstoffzelle oder den Brennstoffzellenblock sein oder auch ein am oder um den abgedichteten Gasraum angeordneter weiterer Gasraum, der beispielsweise durch eine weitere Dichtung von der Atmosphäre um die Brennstoffzelle getrennt ist.

Die beiden Bauteile der Brennstoffzelle sind beispielsweise eine Verbundleiterplatte und eine Elektrolyt-Elektroden-Einheit oder zwei Verbundleiterplatten, wobei die Bauteile mit an die Dichtung angrenzenden Funktionsschichten beschichtet sein können.

In einer vorteilhaften Ausgestaltung der Erfindung ist der Fluorkautschuk ein Fluor-Polymethylen-Kautschuk. Ein solcher Fluorkautschuk weist eine sehr geringe Wasseraufnahme auf, was insbesondere bei Brennstoffzellen, die mit befeuchteten Betriebsgasen betrieben werden, von Vorteil ist. Der Werkstoff quillt nicht auf, verklebt nicht und weist daher eine besonders gute und dauerhafte Formstabilität auf.

Zweckmäßigerweise weist der Fluorkautschuk eine Härte zwischen 60 und 85 Shore A auf. Ein Fluorkautschuk mit dieser Härte weist eine genügende Elastizität zum Abdichten zweier beispielsweise metallischer Bauteile auf und ist gleichzeitig genügend druckfest, um von den Bauteilen nicht zu sehr verformt oder sogar zerstört zu werden.

In einer weiteren vorteilhaften Ausgestaltungsform der Erfindung sind die Bauteile plattenförmig und die Dichtung ist rahmenförmig zwischen den Bauteilen angeordnet, wobei die Dichtung die beiden Bauteile voneinander beabstandet. Hierbei ist einer der Gasräume der Brennstoffzelle im Inneren des Rahmens angeordnet. Bei einem solchen Aufbau sind beispielsweise eine Verbundleiterplatte, die rahmenförmige Dichtung und eine Elektrolyt-Elektroden-Einheit schichtförmig aufeinander aufgebaut. Hierbei kommt der Dichtung eine tragende Funktion zu. Ein wie oben beschriebener Fluorkautschuk weist eine genügende mechanische und chemische Stabilität auf, um während der Lebenszeit der Brennstoffzelle eine nur so geringe Verformung zu zeigen, dass der Dichtung eine tragende Funktion zugewiesen werden kann.

In einer weiteren vorteilhaften Ausführungsform der Erfindung umfasst ein Brennstoffzellenblock eine Vielzahl von wie oben beschriebenen Brennstoffzellen, wobei die Dichtungen jeweils die beiden Bauteile einbetten und einen dem Brennstoffzellenblock Stabilität verleihenden Verbund bilden. Durch die Formbeständigkeit des Fluorkautschuks kann die Dichtung dazu verwendet werden, dem Brennstoffzellenblock im Verbund seine Stabilität zu verleihen. Eine solche Anordnung weist außerdem den Vorteil auf, dass nach einer Schichtung der plattenförmigen Bauteile zu dem Brennstoffzellenblock das Zusammenpressen der plattenförmigen Bauteile nicht nur einen stabilen Brennstoffzellenblock bildet, sondern auch gleichzeitig die Gasräume innerhalb des Brennstoffzellenblocks abdichtet. Hierdurch wird die Montage des Brennstoffzellenblocks erheblich vereinfacht. Durch das Einbetten eines spannungsführenden Bauteils in die Dichtung wird außerdem dieses Bauteil gegenüber der Umgebung elektrisch isoliert. Werden solche eingebetteten Bauteile im Brennstoffzellenblock in der Weise gestapelt, dass nur die Dichtung gegen die Umgebung weist, so sind die Bauteile im Brennstoffzellenblock gegen Berührung von außen geschützt. Die Gefahr von Kurzschlüssen durch ungewollte Berührung der Bauteile von außerhalb des Block ist somit auf sehr einfache Weise gebannt.

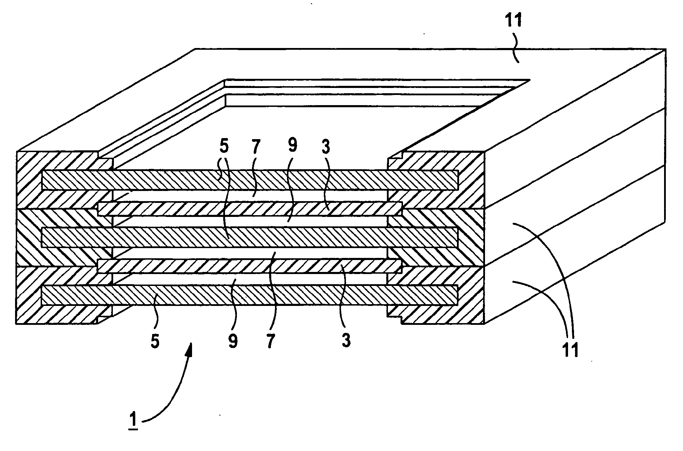

Ein Ausführungsbeispiel der Erfindung wird anhand einer Figur erläutert. Figur 1 zeigt einen Schnitt durch zwei Brennstoffzellen 1, die zusammen mit weiteren in Figur 1 nicht gezeigten Brennstoffzellen einen Brennstoffzellenblock bilden. Die Brennstoffzellen sind PEM-Brennstoffzellen (Polymer-Elektrolyt-Membran-Brennstoffzellen), die für den Betrieb mit reinem Sauerstoff als Oxidationsgas ausgelegt sind. Jede der Brennstoffzellen 1 umfasst eine Elektrolyt-Elektroden-Einheit 3 und zwei den flachen Seiten der Elektrolyt-Elektroden-Einheit 3 benachbarte Verbundleiterplatten 5. Die mittlere der in Figur 1 gezeigten Verbundleiterplatten 5 ist somit Bestandteil beider in Figur 1 gezeigten Brennstoffzellen 1. Zwischen der Elektrolyt-Elektroden-Einheit 3 und den Verbundleiterplatten 5 ist jeweils der Anodengasraum 7 bzw. der Kathodengasraum 9 einer jeden Brennstoffzelle 1 angeordnet. Die Verbundleiterplatten sind von Wasser durchströmbare Thermokarten, mit denen die an sie angrenzenden Gasräume gekühlt oder geheizt werden können.

Die Verbundleiterplatten 5 sind in rahmenförmige Dichtungen 11 eingebettet. Die Dichtungen 11 bestehen aus rußgefülltem bisphenolisch vernetztem Fluorkautschuk oder einem rußgefüllten bisphenolisch vernetzten Fluor-Polymethylen-Kautschuk. Ein solcher Kautschuk ist beispielsweise bei der Gummiwerk Kraiburg GmbH & Co., D-84478 Waldkraiburg unter der Bezeichnung VA 7 AMZ erhältlich. Jeweils zwei Dichtungen 11 betten rahmenförmig eine Elektrolyt-Elektroden-Einheit 3 ein, wobei eine jede Dichtung 11 so ausgestaltet ist, dass sie sich auch zwischen die Elektrolyt-Elektroden-Einheit 3 und die Verbundleiterplatte 5 erstreckt. Dieser sich zwischen die Elektrolyt-Elektroden-Einheit 3 und die Verbundleiterplatte 5 erstreckende Teil der Dichtung 11 verläuft - ebenso wie die gesamte Dichtung 11 - entlang der Kanten der Elektrolyt-Elektroden-Einheit 3. Die Dichtung ist also rahmenförmig zwischen der Elektrolyt-Elektroden-Einheit 3 und der Verbundleiterplatte 5 angeordnet und beabstandet die beiden Bauteile somit voneinander. Da das Material der Dichtungen 11 einen Durchgangswiderstand von mehr als 10¹⁰ Ω x cm bei Raumtemperatur aufweist, werden die Verbundleiterplatten 5 durch die Dichtungen 11 jeweils voneinander elektrisch isoliert gehalten.

Jeweils oberhalb und unterhalb der beiden in Figur 1 dargestellten Brennstoffzellen 1 befinden sich weitere nicht in Figur 1 dargestellte Brennstoffzellen, die zusammen mit den gezeigten Brennstoffzellen 1 einen Brennstoffzellenblock bilden. Die Brennstoffzellen 1 werden durch mehrere in Figur 1 nicht gezeigte Zuganker zusammengepresst. Durch den hierbei entstehenden Druck werden die Dichtungen 11, die eine Härte von 75 Shore A aufweisen, nur geringfügig in ihrer Form verändert. Der Druck bewirkt jedoch ein Zusammenpressen der Dichtungen 11 in der Weise, dass die Gasräume 7, 9 gasdicht von der Umgebung des Brennstoffzellenblocks abgedichtet sind. Die zusammengepressten Dichtungen 11 bilden einen Verbund, der dem Brennstoffzellenblock Stabilität verleiht. Zusammen mit den nicht gezeigten Zugankern bilden die Dichtungen 11 somit einen selbsttragenden Verbund.

Während des Betriebs des Brennstoffzellenblocks strömen durch nicht gezeigte Zu- und Ableitungen Wasserstoff und Sauerstoff in den Anodengasraum 7 bzw. den Kathodengasraum 9 einer jeden Brennstoffzelle 1 des Brennstoffzellenblocks. Jede Dichtung 11 kommt somit während des Betriebs der Brennstoffzellen 1 sowohl mit reinem Wasserstoff als auch mit reinem Sauerstoff in Berührung. Die Dichtungen 11 sind jedoch chemisch sowie mechanisch so stabil, dass sie während einer Betriebszeit von 1000 Stunden so gut wie nicht von den Betriebsgasen Wasserstoff und Sauerstoff angegriffen werden und ihre Form sowie Dichtfähigkeit beibehalten.

## Patentansprüche

1. Brennstoffzelle (1) mit zwei Bauteilen (3, 5), einem an die Bauteile (3, 5) angrenzenden Gasraum (7, 9) und einer zwischen den Bauteilen (3, 5) angeordneten und den Gasraum (7, 9) gegen die Umgebung des Gasraumes abdichtenden Dichtung (11), **dadurch gekennzeichnet, dass** die Dichtung (11) zumindest einen Teilbereich aus rußgefülltem bisphenolisch vernetzten Fluorkautschuk umfasst.

2. Brennstoffzelle (1) nach Anspruch 1,
**dadurch gekennzeichnet, dass** der Fluorkautschuk ein Fluor-Polymethylen-Kautschuk ist.

3. Brennstoffzelle (1) nach Anspruch 1 oder 2,
**dadurch gekennzeichnet, dass** der Fluorkautschuk eine Härte zwischen 60 und 85 Shore A aufweist.

4. Brennstoffzelle (1) nach einem der vorhergehenden Ansprüche, **dadurch gekennzeichnet, dass** die Bauteile (3, 5) plattenförmig sind und die Dichtung (11) rahmenförmig zwischen den Bauteilen (3, 5) angeordnet ist und die Bauteile (3, 5) voneinander beabstandet.

5. Brennstoffzellenblock mit einer Vielzahl von Brennstoffzellen (1) nach Anspruch 4, wobei die Dichtungen (11) jeweils die beiden Baueile (3, 5) einbetten und einen dem Brennstoffzellenblock Stabilität verleihenden Verbund bilden.

## Claims

1. Fuel cell (1) having two components (3, 5), a gas space (7, 9) which adjoins the components (3, 5) and a seal (11) which is arranged between the components (3, 5) and seals off the gas space (7, 9) from the area surrounding the gas space, **characterized in that** the seal (11) comprises at least a partial region made from carbon-black-filled, bisphenol-crosslinked fluororubber.

2. Fuel cell (1) according to Claim 1, **characterized in that** the fluororubber is a fluorine-polymethylene rubber.

3. Fuel cell (1) according to Claim 1 or 2, **characterized in that** the fluororubber has a shore A hardness of between 60 and 85.

4. Fuel cell (1) according to one of the preceding claims, **characterized in that** the components (3, 5) are in plate form and the seal (11) is arranged in frame form between the components (3, 5) and spaces the components (3, 5) apart from one another.

5. Fuel cell block having a multiplicity of fuel cells (1) according to Claim 4, in which the seals (11) in each case embed the two components (2, 5) and form an assembly which imparts stability to the fuel cell block.

## Revendications

1. Pile ( 1 ) à combustible ayant deux éléments ( 3, 5 ) constitutifs, un espace ( 7, 9 ) pour du gaz, voisin des éléments ( 3, 5 ) constitutifs, et une garniture ( 11 ) d'étanchéité interposée entre les éléments ( 3, 5 ) constitutifs et rendant étanche l'espace ( 7, 9 ) pour du gaz vis-à-vis de ce qui l'entoure, **caractérisée en ce que** la garniture ( 11 ) d'étanchéité comprend au moins une zone partielle en caoutchouc fluoré réticulé biphénolique chargée de suie.

2. Pile ( 1 ) à combustible suivant la revendication 1,
**caractérisée en ce que** le caoutchouc fluoré est un caoutchouc de polyméthylène fluoré.

3. Pile ( 1 ) à combustible suivant la revendication 1 ou 2,
**caractérisée en ce que** le caoutchouc fluoré a une dureté shore A comprise entre 100 et 85.

4. Pile ( 1 ) à combustible suivant l'une des revendications précédentes,
**caractérisée en ce que** les éléments ( 3, 5 ) constitutifs sont en forme de plaque et la garniture ( 11 ) d'étanchéité est disposée en forme de cadre entre les éléments ( 3, 5 ) constitutifs et met à distance l'un de l'autre les éléments ( 3, 5 ) constitutifs.

5. Bloc de piles à combustible ayant une pluralité de piles ( 1 ) à combustible suivant la revendication 4, dans lequel les garnitures ( 11 ) d'étanchéité incorporent, respectivement, les deux éléments ( 3, 5 ) constitutifs et forment un composite donnant de la stabilité au bloc de piles à combustible.
